Europäisches Patentamt

European Patent Office

Office européen des brevets

(11) Veröffentlichungsnummer: **0 067 339**
**B1**

(12) **EUROPÄISCHE PATENTSCHRIFT**

(45) Veröffentlichungstag der Patentschrift:
24.09.86

(21) Anmeldenummer: **82104677.8**

(22) Anmeldetag: **27.05.82**

(51) Int. Cl.⁴: **G 08 B 26/00,** G 08 B 29/00

(54) **Verfahren und Anordnung zur Störungserkennung in Gefahren-, insbesondere Brandmeldeanlagen.**

(30) Priorität: **12.06.81 DE 3123451**

(43) Veröffentlichungstag der Anmeldung:
**22.12.82 Patentblatt 82/51**

(45) Bekanntmachung des Hinweises auf die Patenterteilung:
**24.09.86 Patentblatt 86/39**

(84) Benannte Vertragsstaaten:
**AT BE DE FR IT NL SE**

(56) Entgegenhaltungen:
**EP-A-0 004 911**
**DE-A-2 113 536**
**DE-A-2 147 022**
**DE-A-2 341 087**

(73) Patentinhaber: **Siemens Aktiengesellschaft Berlin
und München, Wittelsbacherplatz 2, D-8000
München 2 (DE)**

(72) Erfinder: **Oberstein, Karla, St. Cajetan- Strasse 32,
D-8000 München 80 (DE)**
Erfinder: **Thilo, Peer, Dr.- Ing., Buchhierlstrasse 19,
D-8000 München 71 (DE)**

EP 0 067 339 B1

## Beschreibung

Die Erfindung betrifft ein Verfahren zur Störungserkennung in Gefahrenmeldeanlagen, insbesondere Brandmeldeanlagen gemäß dem Oberbegriff des Patentanspruches 1 und eine Anordnung zur Durchführung des Verfahrens nach Anspruch 4.

Gefahrenmeldeanlagen müssen ein hohes Maß an Sicherheit aufweisen, d.h. nicht funktionsfähige Melder müssen erkannt und angezeigt werden. Dies gilt besonders für automatische Meldeanlagen, wie sie in der Brandmeldetechnik üblich sind. Neben Störungen, die einen Alarm vortäuschen, der auf diese Weise immerhin bemerkt wird, sind weitere Fehlerarten bedeutungsvoll. Beispielsweise kann ein Melder korrekt an einer Meldelinie angeschlossen sein und im Ruhezustand ein richtiges Signal, Ruhesignal, abgeben. Es kann aber seine Auswerteschaltung einen Fehler aufweisen, so daß im Alarmfall sein abgegebenes Ruhesignal nicht in ein Alarmsignal geändert wird und somit zu keiner Alarmanzeige führen kann. Ein Melder, der ordnungsgemäß an eine Meldelinie angeschlossen ist, kann aber auch bei einwandfrei arbeitender Auswerteschaltung eine Störung haben, indem er von seiner Umwelt abgeschlossen ist. Dies kann eintreten durch starke Verschmutzung oder durch eine unachtsame bauliche Veränderung. So kann beispielsweise bei Malerarbeiten ein Plastikmaterial über dem Melder angebracht und versehentlich nicht wieder abgenommen werden. Derartig von der Umwelt abgeschlossene Melder können im Alarmfall kein Alarmsignal abgeben.

Bekannt ist, in herkömmlichen Meldeanlagen die Melder mit einer speziellen Überwachungsschaltung zu versehen, die einzelne Komponenten des Melders kontrollieren und im Falle eines Fehlers ein Störsignal zur Zentrale absenden. Eine vollständige Überwachung auf verschiedenste Fehlermöglichkeiten ist im allgemeinen nicht üblich, da sie mit einem erheblichen Aufwand verbunden ist. Eine Überwachung der Melderauswerteschaltung auf Störungen oder Ausfall würde einen erheblichen Aufwand an elektronischen Bauelementen im Melder bedeuten. Dermaßen komplizierte Kontrollmöglichkeiten sind im Melder im allgemeinen nicht vorgesehen.

In der DE-OS 21 47 022 ist eine Schaltungsanordnung zur Erzielung einer größeren Empfindlichkeit bei einer Störwertmeldeanlage mit schwankenden Störpegeln beschrieben, bei der die einzelnen Störwertmelder nacheinander abgefragt werden und bei der aus den abgegebenen Signalen ein mittlerer Störpegelwert gebildet wird. Die von den Störwertmeldern kommenden Signale werden mit dem mittleren Störpegel verglichen und bei Über- oder Unterschreitung um einen einstellbaren Betrag wird eine Signalabgabeeinrichtung beaufschlagt. Bei dieser bekannten Anordnung wird für sämtliche Störwertmelder ein einziger mittlerer Störwertpegel gebildet, der als an die Umgebung (z.B. Sonneneinstrahlung) angepaßter Vergleichswert für das Ansprechen eines Störwertmelders herangezogen wird. Die bekannte Anordnung gibt keinen Hinweis für jeden einzelnen Melder eine Schwankungsgröße zu bilden und diese dann mit einem vorgebbaren Referenzwert zu vergleichen. Mit der bekannten Anlage ist es nicht möglich einen Melder daraufhin zu überwachen, ob er von seiner Umwelt beispielsweise durch Überstülpen einer Plastiktüte, abgetrennt ist.

Eine Überwachung der Melder auf das Reagieren der normalherrschenden Umwelteinflüsse ist bisher nicht bekannt. So werden Melder, die beispielsweise mit einer Plastikhülle aus irgendeinem Grund abgedeckt wurden, wahrscheinlich erst bei einer turnusmäßigen Revision oder rein zufällig entdeckt.

In der DE-OS 23 41 087 ist eine automatische Brandmeldeanlage beschrieben, bei der eine Vielzahl automatischer Melder an eine Zentrale angeschlossen sind. Die Melder werden zyklisch von der Zentrale aus auf ihre jeweiligen Meldermeßwerte abgefragt. In der Zentrale werden aus den abgefragten und speicherbaren Meldermeßwerten aufgrund zeitlicher Veränderungen, Vergleiche und logische Verknüpfungen differenzierte Meldekriterien abgeleitet. Dabei kann für jeden Melder aus den jeweiligen·Meßwerten eine jeweilige Meldermeßwertsänderung ermittelt werden.

Bei der bekannten Brandmeldeanlage werden die Meldermeßwerte immer zur Bildung von Alarmkriterien herangezogen, Störungen wie Leitungsbruch oder Leitungskurzschluß werden dadurch erkannt, daß die Meldermeßwerte ausbleiben. Mit der bekannten Brandmeldeanlage ist es jedoch nicht möglich, einen abgeschlossenen automatischen Brandmelder, der an sich funktionsfähig ist, als gestört zu erkennen, wenn er von seiner Umwelt abgetrennt ist. Ebenso ist es nicht möglich, noch ein Alarmkriterium zu erkennen, wenn der Brandmelder aufgrund der Alterung von Bauteilen oder aufgrund von Verschmutzungen im Laufe der Zeit seinen Ruhewert dermaßen ändert, daß die übertragenen, einer Alarmbedingung zur Folge veränderten Meldermeßwerte nicht mehr die Schwelle für eine Alarmbedingung erreichen bzw. überschreiten, weil der Ruhewert des Melders sich in entgegengesetzter Richtung zur Alarmschwelle bewegt hat.

Aufgabe der Erfindung ist es daher, die bekannte Brandmeldeanlage derartig weiterzubilden, daß die oben geschilderten Nachteile vermieden werden können und ein Verfahren und eine Anordnung zur Störerkennung für automatische Brandmelder, die an sich voll funktionsfähig sind, aber von ihrer Umwelt abgeschlossen, anzugeben.

Erfindungsgemäß wird diese Aufgabe bei einer eingangs geschilderten Gefahrenmeldeanlage bezüglich des Verfahrens mit den kennzeichnenden Merkmalen des Anspruchs 1 und bezüglich der Anordnung mit den kennzeichnenden Merkmalen des Anspruchs 4 gelöst.

Bei normaler Umweltbeeinflussung und funktionsfähiger Auswerteschaltung zeigen die Meßwerte der Melder statistische Schwankungen. Liegen diese Schwankungen unterhalb einer charakteristischen Schwelle oder fehlen sie ganz, so kann daraus auf eine Störung des Melders geschlossen werden. Melder, die sich in Ruhe befinden, übertragen bei der zyklischen Abfrage ständig ihre Meßwerte zur Zentrale, die beispielsweise als analoge Werte in der Zentrale ausgewertet werden. Aus diesen Meßwerten lassen sich die Änderungen der Meßwerte ermitteln und daraus die jeweiligen Schwankungsgrößen ableiten. Diese umweltbedingten Schwankungsgrößen sind in jedem Fall größer als die Schwankungsgrößen eines nach außen hin abgeschlossenen Melders, der nur einen minimalen Schwankungswert un einen theoretischen Ruhewert aufweist. Dieser laufend ermittelte Schwankungswert wird in vorgegebenen Zeitabständen, beispielsweise gesteuert durch ein Zeitglied, mit einem vorgegebenen Grenzwert für eine minimale Schwankungsgröße verglichen. Liegt die Schwankungsgröße eines Meiders unter dem vorgegebenen Grenzwert, so wird dies als Störung in einer dafür vorgesehenen Störungsanzeige angezeigt.

Zweckmäßigerweise kann man die Meldermeßwertänderung aus dem aktuellen Meßwert, der in einem Meßwertspeicher einschreibbar ist, und einem Meldermeßwert des vorhergehenden Abfragezyklus, der aus dem Speicher abgerufen wird, bilden, indem man den absoluten Differenzbetrag mit einer Subtrahiereinrichtung bildet und als aktuelle Schwankungsgröße weiterverarbeitet. Diese aktuelle Schwankungsgröße wird mit einer · gespeicherten maximalen Schwankungsgröße verglichen, wobei das Maximum der beiden Werte wieder in den Speicher für maximale Schwankungsgrößen eingespeichert wird. In gewissen Zeitabständen wird durch das Zeitglied gesteuert die maximale Schwankungsgröße aus dem Speicher geholt und mit dem vorgegebenen Schwankungsgrößengrenzwert verglichen. Fällt die Schwankungssgröße unter einen gewissen Wert oder bleibt sie gar aus, so wird eine Störung angezeigt. Dabei ist besonders vorteilhaft, daß auf diese Weise das ständig aktive Ruhesignal von der Umwelt des Melders über alle Komponenten des Melders hinweg, durch alle Übertragungseinrichtungen in die Zentrale und dort durch alle Komponenten der Empfangs- und Verarbeitungseinrichtungen hindurchgeführt werden muß und das Ausbleiben dieser Signale einen Störungsfall signalisiert.

In vorteilhafter Weise können zur Ermittlung der Meßwertänderungen und zur Bildung des maximalen Schwankungswertes in der Zentrale zwei Speicher vorgesehen werden. In dem einen Speicher wird die maximale Schwankungsgröße, in dém anderen Speicher die minimale Schwankungsgröße abgespeichert. Dabei wird mit jedem Abfragezyklus der aktuelle Meßwert mit dem Wert des Speichers für maximale Schwankungsgrößen verglichen. Ist er kleiner, so wird er mit dem Meßwert für minimale Schwankungsgrößen aus dem entsprechenden Speicher verglichen. Es wird jeweils der aktuelle Wert in den entsprechenden Speicher eingeschrieben, so daß in dem einen Speicher die aktuelle maximale Schwankungsgsgröße und in dem anderen Speicher die aktuelle minimale Schwankungsgröße eingespeichert ist. In vorgegebenen Zeitabständen, beispielsweise von einigen Stunden, kann durch Differenzbildung die aktuelle Schwankungsgröße gebildet werden, die dann mit dem vorgegebenen Grenzwert verglichen wird.

Anordnung zur Durchführung des Verfahrens werden im einzelnen anhand zweier Schaltbeispiele näher erläutert.

Dabei zeigen

Figur 1 eine Prinzipschaltung einer herkömmlichen Brandmeldeanlage,

Figur 2 ein Melder-Meßwertdiagramm,

Figur 3 ein Blockschaltbild der erfindungsgemäßen Anordnung,

Figur 4 ein erstes Schaltbeispiel zur erfindungsgemäßen Störungserkennung und

Figur 5 ein zweites Schaltbeispiel.

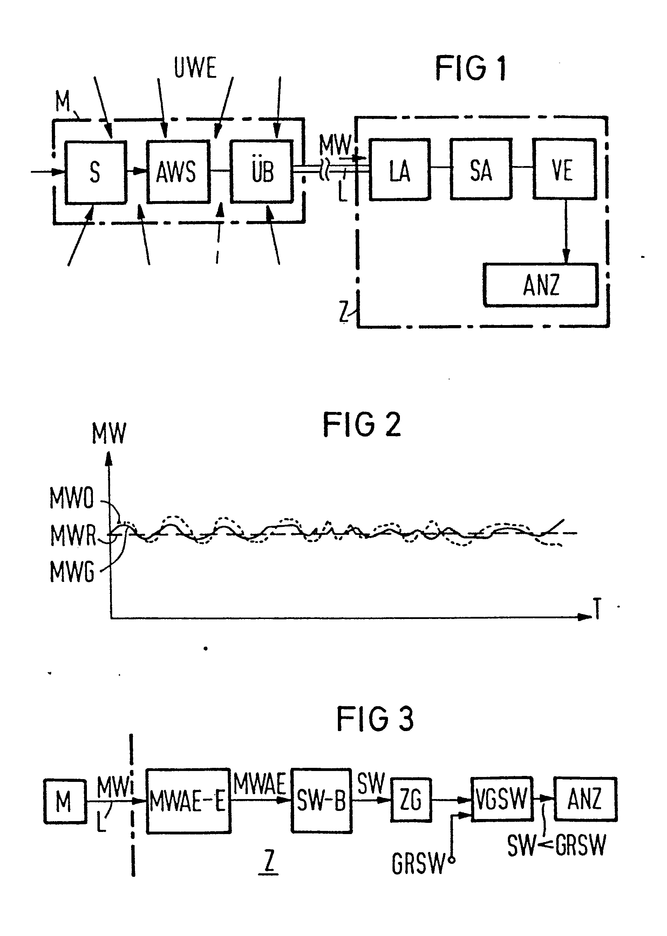

In Figur 1 ist ein Melder M dargestellt, der normalerweise zu seiner Umwelt UWE hin offen ist. Der Sensor S des Melders kann auf die Umwelteinflüsse reagieren. Dies wird durch eine Meldeauswerteschaltung AWS erkannt und mit Hilfe einer Übertragungseinrichtung ÜB über die Meldeleitung L zur Zentrale Z übertragen. Die Zentrale Z weist üblicherweise eine Linienanschaltung LA und eine Signalanpassungsschaltung SA auf, die die Meldermeßwerte MW empfangen. In einer dieser Empfangseinrichtung nachgeschalteten Verarbeitungseinrichtung VE werden die Meldermeßwerte verarbeitet und ausgewertet und entsprechend einer Anzeigeeinheit ANZ zugeführt.

Das in Figur 2 dargestellte Meldermeßwertdiagramm veranschaulicht die Meldermeßwerte, wenn der Melder in Ruhe ist. Dabei ist durch eine Gerade angedeutet, daß theoretischerweise der Melder, wenn er in Ruhe ist, einen geradlinigen Meßwertverlauf haben würde. In Wirklichkeit hat der Meldèr aber einen Ruhewert, der mehr oder weniger große Schwankungen um diesen theoretischen Melderruhewert MWR aufweist. Betrachtet man den Melder als total abgeschlossen zu seiner Umweit, so sind auch hier noch kleine Meßwertschwarkungen MWG vorhanden, da die Bauelemente des Melders mindestens aufgrund des thermischen Rauschens kleine Schwankungen verursachen. Ein Melder, der zu seiner Umgebung hin offen ist, weist erheblich größere Schwankungen MWO auf gegenüber den Meßwertschwankungen MWG. Ein funktionsfähiger Melder ist immer Temperaturschwankungen, leichten Luftströmungen, normalen Rauchveränderungen, usw. ausgesetzt, die diese Schwankungen des Meßwerts um einen gedachten Ruhewert hervorrufen. Sinken diese statistischen Schwankungsgrößen unter einen bestimmten, beispielsweise empirisch ermittelten Wert, so kann man davon ausgehen, daß der Melder zu seiner Umwelt keine Verbindung mehr hat, obwohl der Melder bei der Ruhestromüberwachung als intakt erkannt wurde. Dies wird erfindungsgemäß ausgewertet.

Figur 3 zeigt ein Blockschaltbild der erfindungsgemäßen Anordnung am Beispiel für einen Melder veranschaulicht. Der Melder M ist über die Meldeleitung L mit der Zentrale Z verbunden. Aus den Meldermeßwerten MW wird in einer Einrichtung zur Ermittlung der Meßwertsänderungen MWAE-E die Meßwertsänderung MWAE ermittelt. Dieser Wert wird zur Bildung der Schwankungsgröße einer Einrichtung SW-B zugeführt, die die Schwankungsgröße SW ermittelt und über ein Zeitglied ZG gesteuert einer nachgeordneten Vergleichseinrichtung VGSW zuführt. Diese Vergleichseinrichtung VGSW ist mit einem Grenzwert, einer vorgegebenen Schwankungsgröße GRSW, beaufschlagt. Ist die ermittelte Schwankunrsgröße SW kleiner als die vorgegebene Schwelle für die Schwankungsgröße GRSW, so wird die nachgeschaltete Anzeige ANZ angesteuert, um eine Störungsanzeige zu veranlassen.

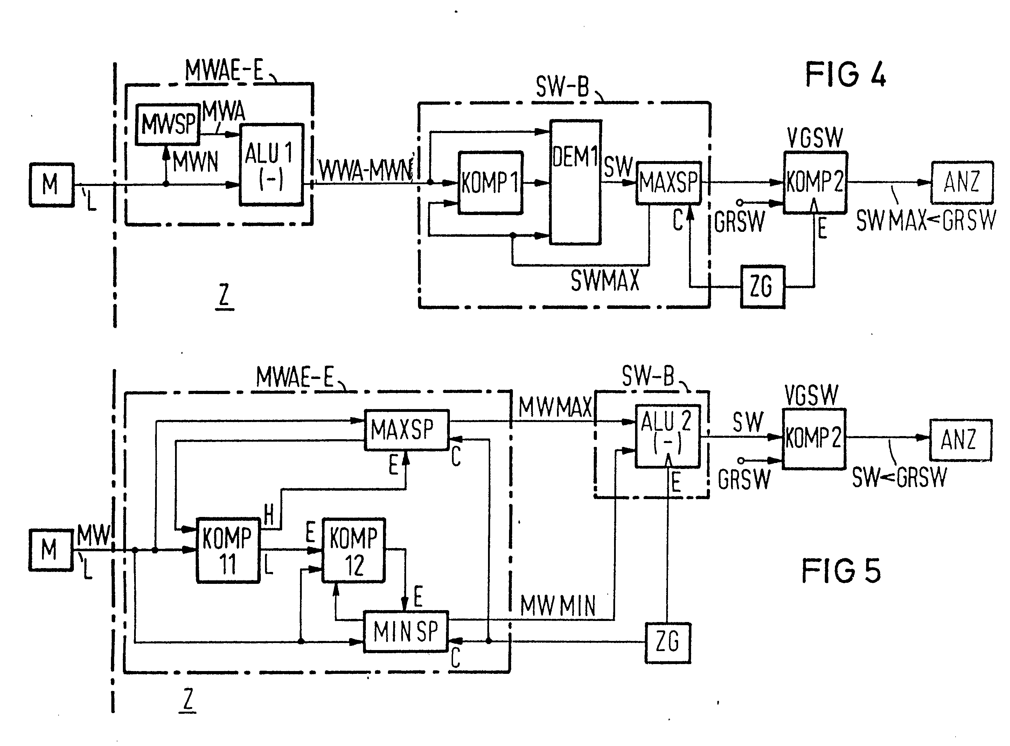

Im ersten Ausführungsbeispiel zur erfindungsgemäßen Störungserkennung gemäß Figur 4 ist in der Zentrale Z ein erster Speicher MWSP vorgesehen. An diesen Speicher MWSP gelangt der Meldermeßwert MW des Melders M, der über die Meldeleitung L an die Zentrale Z angeschlossen ist. Dieser Meldermeßwert MW wird als aktueller Meldermeßwert MWN in den Speicher MWSP eingeschrieben und gleichzeitig an eine arithmetische logische Einheit ALU1 gegeben. Diese logische Einheit ALU1 bildet den Absolutbetrag aus der Differenz des letzten Meßwerts MWA, der aus dem Meßwertspeicher MWSP geholt wird, und aus dem aktuellen Meßwert MWN ($|MWA-MWN|$). Dieser Ausgangswert, der ALU1, wird einem ersten Komparator KOMP1 zugeführt, und mit dem Wert aus dem dem Komparator KOMP1 nachgeschalteten Speicher MAXSP für die maximale Meßwertänderung MWMAX verglichen. Beim ersten Abfragezyklus wird der Speicher für maximale Meßwertänderungen MAXSP mit Null beschrieben und der Meldermeßwertspeicher MWSP mit dem aktuellen Meßwert MWN beschrieben. Bei jedem weiteren Zyklus wird, wie erläutert, der absolute Differenzbetrag ($|MWA-MWN|$) gebildet und mit

dem Maximalwert der Meßwertänderung MWMAX aus dem MAXSP verglichen. Das Maximum der beiden Werte wird dann jeweils in den Speicher für maximale Meßwertsänderungen MAXSP abgespeichert. Diese Entscheidung wird mit dem Demultiplexer DEM1, der dem Komparator KOMP1 nachgeschaltet ist, getroffen. Dem Speicher für maximale Meßwertänderungen MAXSP ist ein zweiter Komparator KOMP2 und ein Zeitglied ZG nachgeschaltet. Das Zeitglied ZG steuert den Komparator KOMP2 und setzt gleichzeitig über den Eingang C den Speicher MAXSP in seine Ausgangsstellung (Null) zurück. Hat nach einer vorgegebenen Zeit T das Zeitglied ZG einen Impuls an den Komparator KOMP2 (Enable-Eingang E) abgegeben, so vergleicht dieser die maximale Schwankungsgröße SWMAX aus dem Speicher MAXSP mit einem vorgegebenen Grenzwert für Schwankungsgrößen GRSW. Ist der Inhalt von MAXSP kleiner als GRSW, so wird ein Signal an die Anzeige ANZ für Störung abgegeben. Der Meldermeßwertspeicher MWSP und die arithmetische logische Einheit ALU1 entspricht der Einrichtung zur Ermittlung der Meßwertänderung MWAE-E. Die Einrichtung zur Bildung der Schwankugsgröße SW-B weist den Komparator KOMP1 mit nachgeschaltetem Demultiplexer DEM1 und den Speicher für maximale Meßwertänderungen MAXSP auf. Die Vergleichseinrichtung VGSW gemäß Figur 3 entspricht in Figur 4 dem zweiten Komparator KOMP2.

Im zweiten Schaltbeispiel gemäß Figur 5 wird nicht der absolute Differenzbetrag aus zwei aufeinanderfolgenden Meldermeßwerten gebildet und weiterverarbeitet wie gemäß Figur 4 beschrieben. Es sind in der Zentrale Z zwei Speicher vorgesehen, einer für den maximalen Meldermeßwert MAXSP und einer für den minimalen Meldermeßwert MINSP. Der Speicher für den maximalen Meldermeßwert MAXSP wird zu Beginn auf Null gesetzt, der Speicher MINSP auf einen größtmöglichen Meßwert. Bei jedem Meßzyklus wird dann der aktuelle Meßwert MW, der vom Melder M über die Meldeleitung L zur Zentrale Z gelangt, zuerst mit dem Speicher MAXSP verglichen. Dazu ist ein erster Komparator KOMP11 vorgesehen, an dessen einem Eingang der aktuelle Meldermeßwert MW und an dessen anderem Eingang der im Speicher MAXSP gespeicherte maximale Meßwert MWMAX anstehen. Ergibt der Vergleich, daß der neue Meldermeßwert größer als der maximale Meldewert MWMAX ist, so wird der Speicher MAXSP mit dem neuen Meßwert überschrieben. Dabei gibt der Komparator KOMP11 einen "High"-Pegel H an den "Enable"-Eingang E des Speichers MAXSP ab und der am Speicher MAXSP anstehende neue Meldermeßwert wird eingeschrieben. Ist der Meldermeßwert kleiner, so wird er mit dem Meldermeßwert MWMIN des Speichers für minimalen Meldermeßwert MINSP verglichen. Dazu wird über den L-Ausgang des ersten Komparators KOMP11 ein "Low"-Pegel an den ersten Eingang, dem "Enable"-Eingang E des zweiten Komparators KOMP12 gegeben. Dieser vergleicht den am zweiten Eingang des Komparators KOMP1 anstehenden Meldermeßwert mit dem minimalen, Meßwert aus dem Speicher MINSP. Ist er kleiner, so wird dem Speicher MINSP der neue minimale Meßwert eingeschrieben, indem der Komparator KOMP12 ein Signal an den "Enable"-Eingang E des Speichers MINSP abgibt. Beide Speicher führen mit ihren Ausgängen auf eine nachgeordnete arithmetische logische Einheit ALU2, so daß der maximale Meldermeßwert MWMAX und der minimale Meldermeßwert MWMIN aus den entsprechenden Speichern (MAXSP u. MINSP) anstehen. Ein Zeitglied ZG, das der arithmetischen logischen Einheit ALU2 zugeordnet ist, veranlaßt die ALU2, die Differenz aus dem maximalen und minimalen Meldermeßwert (MWMAX-MWMIN) zu bilden und das Ergebnis SW anschließend an den der ALU2 nachgeschalteten dritten Komparator KOMP2 zu liefern. Das Zeitglied ZG setzt außerdem beide Speicher MAXSP und MINSP auf ihre Anfangswerte zurück. Aus diesem Grunde ist das Zeitglied ZG noch mit einem jeweilingen "Clear"-Eingang C der beiden Speicher MAXSP und MINSP verbunden. Der dritte Komparator KOMP2 vergleicht die Schwankungsgröße SW aus der ALU2 mit dem vorgegebenen Grenzwert GRSW und steuert eine Störungsanzeige ANZ an, sobald die Schwankungsgröße SW kleiner ist als der Grenzwert GRSW.

Nach dem erfindungsgemäßen Verfahren werden funktionsgefährdende Ausfälle und Störeinflüsse unmittelbar nach ihrem Auftreten umfassend, auf einfache und sichere Weise erkannt. Mit der Anwendung von Mikrocomputern läßt sich dieses Verfahren in Meldeanlagen preiswert realisieren.

**Patentansprüche**

1. Verfahren zur Störungserkennung in einer Gefahrenmeldeanlage, insbesondere Brandmeldeanlage mit einer Vielzahl automatischer Melder (M), die an einer Zentrale (Z) angeschlossen sind, von der aus zyklisch die Melder (M) auf ihre jeweiligen Meldermeßwerte (MW) abgefragt werden und in der aus den abgefragten und speicherbaren Meldermeßwerten aufgrund zeitlicher Veränderungen, Vergleiche und logische Verknüpfungen differenzierte Meldekriterien abgeleitet werden, wobei für jeden Melder (M) aus den jeweiligen Meßwerten (MW) eine jeweilige Melder-Meßwertsänderung (MWAE) ermittelt wird,
dadurch gekennzeichnet, daß aus den Meßwerten (MW) des in Ruhe befindlichen Melders (M) die Melder-Meßwertsänderung (MWAE) ermittelt und daraus jeweils eine Schwankungsgröße (SW) für den betreffenden Melder (M) gebildet wird, die in vorgebenen Zeitabständen mit einem vorgegebenen Grenzwert (GRSW) verglichen wird, wobei bei Unterschreitung (SW < GRSW) eine Störungsanzeige (ANZ) angesteuert wird.

2. Verfahren nach Anspruch 1, dadurch gekennzeichnet, daß zur Ermittlung der Melder-Meßwertsänderungen (MWAE) aus dem aktuellen Meßwert (MWN) und dem vorherigen, gespeicherten Meßwert (MWA) der absolute Differenzbetrag (MWA-MWN) gebildet und als aktuelle Schwankungsgröße (SW) gespeichert wird, daß die Schwankungsgröße (SW) jeweils erneut gebildet und mit der gespeicherten Schwankungsgröße (SWMAX) verglichen wird, wobei bei Überschreitung (SW > SWMAX) die neue Schwankungsgröße (SWN) als maximale Schwankungsgröße (SWMAX) in den Speicher für maximale Schwankungsgrößen (MAXSP) geschrieben wird, und daß in vorgegebenen Zeitabständen die gespeicherte maximale Schwankungsgröße (SWMAX) mit dem vorgegebenen Grenzwert (GRSW) verglichen wird.

3. Verfahren nach Anspruch 1, dadurch gekennzeichnet, daß zur Ermittlung der Melder-Meßwertsänderungen (MWAE) aus mehreren aufeinanderfolgenden Meßwerten (MW) mit Vergleichseinrichtungen (KOMP11, KOMP12) der maximale bzw. der minimale Meldermeßwert (MWMAX bzw. MWMIM) ermittelt und gespeichert wird und in vorgegebenen Zeitabständen daraus durch Differenzbildung die Schwankungsgröße (SW) gebildet wird, die mit dem vorgegebenen Grenzwert (GRSW) verglichen wird.

4. Anordnung zur Durchführung des Verfahrens nach Anspruch 1, dadurch gekennzeichnet, daß in der Zentrale eine Einrichtung (MWAE-E) zur Ermittlung der Meßwertsänderungen (MWAE) der Melder (M) und dieser (MWAE-E) nachgeschaltet eine Vorrichtung (SW-B) zur Bildung der Schwankungsgröße (SW) angeordnet sind, daß dieser Vorrichtung (SW-B) ein Zeitglied (ZG) zur Bildung der vorgegebenen Zeitabstände und eine mit einem vorgegebenen Grenzwert (GRSW) beaufschlagte Vergleichseinrichtung (VGSW) nachgeordnet ist, und daß der Vergleichseinrichtung (VGSW) eine Anzeigeeinrichtung (ANZ) nachgeschaltet ist.

5. Anordnung nach Anspruch 4, dadurch gekennzeichnet
daß die mit den Melder-Meßwerten (MW) beaufschlagte Einrichtung (MWAE-E) zur Ermittlung der Meßwertsänderungen (MWAE) einen Melder-Meßwert-Speicher (MWSP) und eine arithmetische logische Einheit (ALU1) aufweist, deren erster Eingang mit dem Melder (M) und dem Eingang des Meßwertspeichers (MWSP) und deren zweiter Eingang mit dem Ausgang des Meßwertspeichers (MWSP) verbunden ist, wobei in der arithmetischen logischen Einheit (ALU1) der absolute

Differenzbetrag der Meldermeßwerte (|MWA-MWN|) bildbar ist, daß die Vorrichtung (SW-B) zur Bildung der Schwankungsgröße (SW) einen ersten Komparator (KOMP1) mit nachgeschaltetem Demultiplexer (DEM1) und einen mit dem Demultiplexer (DEM1) verbundenen Schwakungsgrößen-Speicher (MAXSP) aufweist, wobei der Komparator (KOMP1) mit dem Differenzbetrag der Meldermeßwerte (MWA-MWN) der arithmetischen logischen Einheit (ALU1) und deren maximaler Schwankungsgröße (SWMAX) des Schwankungsgrößen-Speichers (MAXSP), der Demultiplexer (DEM1) mit dem Differenzbetrag der Meldrrmeßwerte (MWA-MXN), mit der gespeicherten maximalen Schwankungsgröße (SWMAX) und dem Ausgangssignal des Komparators (KOMP1) beaufschlagbar ist,

daß die Vergleichseinrichtung (VGSW) ein zweiter Komparator (KOMP2) ist, der einerseits mit einem zweiten Ausgang des Schwankungsgrößenspeichers (MAXSP) und andererseits mit dem Zeitglied (ZG), das seinerseits mit dem "Clear"-Eingang des Schwankungsgrößenspeichers (MAXSP) verbunden ist, und daß dem Ausgang des zweiten Komparators (KOMP2) eine Anzeigeeinrichtung (ANZ) nachgeschaltet ist. (Figur 4).

6. Anordnung nach Anspruch 4 oder zur Durchführung des Verfahrens nach Anspruch 3, dadurch gekennzeichnet, daß die mit den Melder-Meßwerten (MW) beaufschlagbare Einrichtung (MWAE-E) zur Ermittlung der Melder-Meßwertänderungen (MWAE) einen ersten Komparator (KOMP11) und diesem nachgeschaltet einen zweiten Komparator (KOMP12) und zwei Speicher (MAXSP und MINSP) für·den maximalen bzw. minimalen Melder-Meßwert (MWMAX bzw. MWMIN) aufweist, wobei der Melder (M) mit jeweils einem Eingang der beiden Komparatoren (KOMP11, KOMP12) und den beiden Speichern (MAXSP, MINSP) verbunden ist, der zweite Eingang des ersten Komparators (KOMP11) mit einen Ausgang des Speichers für maximale Meßwerte (MXSP) verbunden ist, der "High"-Ausgang des ersten Komparators (KOMP11) zur Speicherung des maximalen Meßwertes (MWMAX) an den "Enable"-Eingang des Speichers für maximale Meßwerte (MAXSP) führt, der "Low" Ausgang des ersten Komparators (KOMP11) auf den "Enable"-Eingang des zweiten Komparators (KOMP12) führt, dessen Ausgang zur Speicherung des Speichers für minimale Meßwerte (MINSP) führt, der seinerseits mit einem zweiten Eingang des zweiten Komparators (KOMP12) verbunden ist,

daß die Vorrichtung (SW-B) zur Bildung der Schwankungsgröße (SW) eine arithmetische logische Einheit (ALU2) aufweist, deren einer Eingang mit dem Ausgang des Speichers für maximale Meßwerte (MAXSP) und deren anderer Eingang nit dei Ausgang des Speichers für minimale Meßwerte (MINSP) verbunden ist, wobei von einem der arithmetischen logischen Einheit (Eingang S der ALU2) und den Speichern (Eingang C der MAXSP und MINSP) zugeordneten Zeitglied (ZG) zeitgesteuert in der ariyhmetischen logischen Einheit (ALU2) durch Subtrahieren des minimalen Melder-Meßwerts (MWMIN) vom maximalen Melder-Meßwert (MWMAX) die Schwankungsgröße (SW) bildbar ist, und daß der Ausgang der arithmetischen logischen Einheit (ALU2) mit einem mit einem vergegebenen Grenzwert (GRSW) beaufschlagten weiteren Komparator (KOMP2) mit nachgeschalteter Anzeigeeirrichtung (ANZ) verbunden ist.

**Claims**

1. A method of recognising malfunctions in a hazard alarm system, in particular a fire alarm system, with a plurality of automatic alarms (M) which are connected to a central control (Z) from which the alarms (M) are cyclically interrogated in respect of their alarm measured values (MW) and in which differentiated alarm criteria are derived from the interrogated and storable alarm measured values on the basis of time changes, comparisons and logic links, where an alarm-measured value change (MWAE) is determined for each alarm (M) on the basis of the measured values (MW) in question, characterised in that the alarm measured value change (MWAE) is determined from the measured values (MW) of the alarm (M) at rest, and from this alarm-measured value change a fluctuation value (SW) is formed for the alarm (M) in question and, at predetermined intervals of time, is compared with a given limit value (GRSW) where, in the event of an undershooting (SW < GRSW) a malfunction display (ANZ) is actuated.

2. A method as claimed in claim 1, characterised in that for the determination of the alarm-measured value changes (MWAE) the, absolute difference amount (MWA-MWN) is formed from the current measured value (MWN) and the preceding, stored measured value (MWA) and is stored as surrent fluctuation value (SW), that the fluctuation value (SW) is reformed and is compared with the stored fluctuation value (SWMAX), where, in the event of an overshooting (SW > SWMAX), the new fluctuation dalue (SWN) is input, as maximum fluctuation value (SWMAX), into the store for maximum fluctuation values (MAXSP) and that at predetermined intervals of time the stored maximum fluctuation value (SWMAX) is compared with the given limit value (GRSW).

3. A method as claimed in claim 1, characterised in that for the determination of the alarm-measured value changes (MWAE) the maximum and minimum alarm measured values (MWMAX and MWMIN) are determined from a plurality of consecutive measured values (MW) with the aid of comparison devices (KOMP11, KOMP12), and are stored, and at predetermined intervals of time the fluctuation value (SW) is formed from these maximum and minimum alarm-measured values by difference formation and is compared with the given limit value (GRSW).

4. An arrangement for the implementation of the method claimed in claim 1, characterised in that in the central control are arranged a device (MWAE-E) which serves to determine the measured value changes (MWAE) of the alarms (M) and, following this device (MWAE-E), a device (SW-B) which serves to form the fluctuation value (SW), that this device (SW-B) is connected at its output end to a timer (ZG) which serves to form the predetermined time intervals and to a comparison device (VGSW) which is fed with a given limit value (GRSW), and that the comparison device (VGSW) is connected at its output end to a display device (ANZ).

5. An arrangement as claimed in claim 4, characterised in that the device (MWAE-E) which is supplied with the alarm-measured values (MW) and which serves to determine the measured value changes (MWAE) comprises an alarm-measured value store (MWSP) and an arithmetical logic unit (ALU1) whose first input is connected to the alarm (M) and to the input of the measured value store (MWSP) and whose second input is connected to the output of the measured value store (MWSP), where the absolute difference amount of the alarm-measured values ($|MWA-MWN|$) can be formed in the arithmetical logic unit (ALU1), that the device (SW-B) which serves to form the fluctuation value (SW) comprises a first comparator (KOMP1) which is connected at its output end to a demultiplexer (DEM1) and of a fluctuation value store (MAXSP) which is connected to the demultiplexer (DEM1), where the comparator (KOMP1) can be supplied with the difference between the alarm-measured values (MWA-MWN) from the arithmetical logic unit (ALU1) and with the maximum fluctuation value thereof (SWMAX) from the fluctuation value store (MAXSP), whereas the demultiplexer (DEM1) can be supplied with the difference between the alarm-measured values (MWA-MXN), the stored maximum fluctuation value (SWMAX) and the output signal from the comparator (KOMP1),

that the comparison devise (VGSW) is a second comparator (KOMP2) which is connected on the one hand to a second output of the fluctuation value store (MAXSP) and on the other hand to the timer (ZG) which is itself connected to the clear input of the fluctuation value store (MAXSP) and that the output of the second comparator (KOMP2) leads to a display device (ANZ). (Fig. 4).

6. An arrangement as claimed in claim 4 for the execution of the method claimed in claim 3, characterised in that the device (MWAE-E) which can be supplied with the alarm measured values (MW) and which serves to determine the alarm-measured value changes (MWAE) comprises a first comparator (KOMP11) and, following the latter, a second comparator (KOMP12) and two stores (MAXSP and MINSP) for the maximum and minimum alarm-measured values (MWMAX and MWMIN), where the alarm (M) is in each case connected to an input of the two somparators (KOMP11, KOMP12) and the two stores (MAXSP, MINSP), the sesond input of the first comparator (KOMP11) is connected to an output of the store for maximum measured values (MAXSP), the "high" output of the first comparator (KOMP11) which serves to store the maximum measured value (MWMAX) leads to the "enable" input of the store for maximum measured values (MAXSP), the "low" output of the first comparator (KOMP11) leads to the "enable" input of the second comparator (KOMP12) whose output, for the storage of the minimum measured value (MWMIN), leads to the "enable" input of the store for minimum measured values (MINSP) which is itself connected to a second input of the second comparator (KOMP12),

that the device (SW-B) which serves to form a fluctuation value (SW) comprises an arithmetical logic unit (ALU2) whose first input is connected to the output of the store for maximum measured values (MAXSP) and whose other input is connected to the output of the store for minimum measured values (MINSP), where, by means of a timer (ZG) which is assigned to the arithmetical logic unit (input S of the ALU2) and the stores (input C of the MAXSP and MINSP), the fluctuation value (SW) can be formed in time-controlled fashion in the arithmetical logic unit (ALU2) by subtracting the minimum alarm-measured value (MWMIN) from the maximum alarm-measured value (MWMAX), and that the output of the arithmetical logic unit (ALU2) is connested to a further comparator (KOMP2) which is fed with a predetermined limit value (GRSW) and which is connected at its output end to the display devise (ANZ).

**Revendications**

1. Procédé pour la reconnaissance d'un dérangement dans une installation de signalisation d'un danger, en particulier installation de signalisation d'un incendie avec une pluralité de dispositifs automatiques de signalisation (M) qui sont reliés à une centrale (Z) à partir de laquelle les dispositifs de signalisation (M) sont interrogés cycliquement pour ce qui concerne leurs valeurs de mesure de siqnalisation respectives (MW), et dans lequel on dérive, à partir de ces valeurs de mesure interrogées et susceptibles d'être mémorisées, et sur la base de modifications dans le temps, de comparaisons et de combinainaisons logiques, des critéres de signalisation différenciés, alors que pour chaque dispositif de signalisation (M) on détermine, à partir des valeurs de mesure respectives (MW), une modification correspondante de la valeur de mesure du dispositif de signalisation (MWAE), caractérisé par le fait qu'à partir des valeurs de mesure (MW) du dispositif de signalisation (M) qui est au repos, on détermine la modification de la valeur de mesure du dispositif de signalisation (MWAE) et qu'on en forme une grandeur de variation (SW) pour le dispositif de signalisation concerné (M) ladite grandeur de variation étant comparée avec une valeur limite (GRSW) donnée à l'avance et un dispositif indicateur d'un dérangeméet étant commandé en cas de dépassement (SW < GRSW)

2. Procédé selon la revendication 1, caractérisé par le fait que pour déterminer les modifications de la valeur de mesure du dispositif de signalisation (MWAE), on forme, à partir de la valeur de mesure actuelle (MWN) et de la valeur de mesure antérieure qui a été mémorisée (MWA), la différence absolue (MWA-MWN) que l'on mémorise comme grandeur actuelle de variation (SW), que la grandeur de variation (SW) est formée à nouveau et est comparée avec la qrandeur de variation mémorisée (SWMAX), la réalisation étant telle que lors d'un dépassement (SW > SWMAX), la nouvelle valeur de la variation (SWN) est inscrite, en tant que valeur de variation maximale (SWMAX), dans la mémoire pour les grandeurs maximales de variation (MAXSP), et qu'à des intervalles de temps prédéterminés, la grandeur de variation maximale (SWMAX) qui a été mémorisée, est comparée avec la valeur limite (GRSW) qui a été donnée à l'avance.

3. Procédé selon la revendication 1, caractérisé par le fait que pour déterminer les modifications de la valeur de mesure du dispositif de signalisation (MWAE) on détermine, à partir de plusieurs valeurs de mesure (MW) successives et avec des dispositifs comparateurs (KOMP 11, KOMP 12), la valeur maximale ou minimale du dispositif de signalisation (MWMAX et MWMIN) que l'on mémorise, et qu'on en forme, à des intervalles de temps prédéterminés, par formation de la différence, la grandeur de la variation (SW), grandeur qui est comparée avec la valeur limite (GRSW) donnée à l'avance.

4. Dispositif pour la mise en oeuvre du procédé selon la revendication 1, caractérisé par le fait que l'on prévoit dans la centrale une installation (MWAE-E) pour déterminer les modifications de la valeur de mesure (MWAE) des dispositifs de signalisation (M) et un dispositif (SW-B) qui est monté en aval de ladite installation (MWAE-E), et servant à former la grandeur de la variation (SW), qu'en aval de ce dispositif (SW-B) est monté un dispositif de temporisation (ZG) permettant de former les intervalles de temps predéterminés, ainsi qu'un comparateur (VGSW) qui est chargé par une valeur limite prédéterminée (GRSW), et qu'en aval du comparateur (VGSW) est monté un dispositif de signalisation (ANZ).

5. Dispositif selon la revendication 4, caractérisé par le fait que l'installation (MWAE-E) qui est chargée avec les valeurs de mesure (MW) du dispositif de signalisation, et qui sert à déterminer les modifications de la valeur de mesure (MWAE-E), comporte une mémoire de valeurs de mesure (MWSP) du dispositif de signalisation et une unité logique arithmétique (ALU1) dont la première entrée est reliée au dispositif de signalisation (M) et à l'entrée de la mémoire de valeurs de mesure (MWSP) et dont la seconde entrée est reliée à la sortie de la mémoire de valeurs de mesure (MWSP), la réalisation étant telle que dans l'unité arithmétique et logique (ALU1) est susceptible d'être formée la différence absolue de la valeur de mesure du dispositif de signalisation (|MWA-MWN|), que le dispositif (SW-E) servant à former la grandeur de variation (SW) comporte un premier comparateur (KOMP1) avec démultiplexeur (DEM1) aval, ainsi qu'une mémoire de grandeur de variation (MAXSP) reliée au démultiplexeur (DEM1), alors que le comparateur (KOMP1) susceptible d'être chargé avec la différence des valeurs de mesure du dispositif de signalisation (MWA-MWN) de l'unité logique arithmétique (ALU1) et ces grandeurs de variation maximale (SWMAX) de la mémoire des grandeurs de variation (MAXSP), que le démultiplexeur (DEM1) est susceptible d'être chargé avec la différences des valeurs de mesure de l'appareil le signalisation (MWS-MXN), avec la grandeur de variation maximale qui a été mémorisée (SWMAX) et avec le signal de sortie du comparateur (KOMP1), alors que le dispositif comparateur (VGSW) est un second comparateur (KOMP2) qui est relié, d'une part, avec une seconde sortie de la mémoire des valeurs de variation (MAXSP) et, d'autre part, avec le dispositif de temporisation (ZG) qui à son tour est relié à l'entrée "Clear" de la mémoire des grandeurs de variation (MAXSP), et qu'en aval de la sortie du second comparateur (KOMP2) est monté un dispositif de signalisation (ANZ) (figure 4).

6. Dispositif selon la revendication 4, pour la mise en oeuvre du procédé selon la revendication 3, caractérisé par le fait que l'installation (MWAE-E) qui est susceptible d'être chargée avec les valeurs de mesure du dispositif de signalisation, et qui sert à déterminer les modifications de la valeur de mesure (MWAE) du dispositif de signalisation comporte un premier comparateur (KOMP11) et un second comparateur (KOMP12) monté en aval du premier, ainsi que deux mémoires (MAXSP et MINSP) pour les valeurs de mesure maximales ou minimales (MWMAX ou MWMIN) du dispositif de signalisation, le dispositif de signalisation (M) étant relié respectivement à une entrée des deux comparateurs (KOMP11, KOMP12) et aux deux mémoires (MAXSP, MINSP), la seconde entrée du premier comparateur (KOMP11) étant reliée avec une première sortie de la mémoire pour les valeurs de mesure maximales (MAXSP), la sortie "au haut" du premier comparateur (KOMP11) servant à la mémorisation des valeurs de mesure maximales (MWMAX) étant reliée à l'entrée "d'autorisation" et de la mémoire pour les valeurs de mesure maximales (MAXSP), la sortie "basse" du premier comparateur (KOMP11) étant reliée à l'entrée "autorisée" du second comparateur (KOMP12) dont la sortie est reliée, en vue de la mémorisation de la valeur de mesure minimale (MWMIN), à l'entrée "autorisée" de la mémoire pour les valeurs de mesure minimales (MINSP) et qui est reliée, à son tour, à une seconde entrée du second comparateur (KOMP12), que le dispositif (SW-B) servant à former les grandeurs de variation (SW) comporte une untité arithmétique logique (ALU2) dont une entrée est reliée à la sortie de la mémoire pour les valeurs de mesure maximales (MAXSP) et dont l'autre entrée est reliée à la sortie de la mémoire pour les valeurs de mésure minimales (MINSP), alors qu'à l'aide d'un dispositif de temporisation (ZG) qui est associé à l'unité arithmétique et logique (entrée S de ALU2) et les mémoires (entrée C de MAXSP et MINSP) conformes aux fonctions du temps, dans l'unité arithmétique logique (ALU2) et par soustraction de la valeur de mesure minimale (MWMIN) du dispositif de signalisation de la valeur de mesure maximale (MWMAX) du dispositif de signalisation, la grandeur de variation (SW), et que la sortie de l'unité arithmétique logique (ALU2) est reliée à un comparateur supplémentaire (KOMP2) qui est chargé avec une valeur limite prédéterminée (GRSW) et en aval duquel est monté un dispositif d'affichage (ANZ).

## FIG 1

UWE

M

S → AWS → ÜB

MW
L

LA → SA → VE

VE → ANZ

Z

## FIG 2

MW

MWO
MWR
MWG

T

## FIG 3

M

MW
L

MWAE-E

MWAE

SW-B

SW

ZG

VGSW

ANZ

Z

GRSW

SW < GRSW

1

FIG 4

FIG 5

0 067 339